# EUROPEAN PATENT APPLICATION

(11) **EP 3 766 337 A1**
(43) Date of publication of application: **20.01.2021**
(21) Application number: 19187437.9
(22) Date of filing: 19.07.2019
(51) Int. Cl.: A01G 9/14, A01G 9/16, A01G 13/02

(54) **MODULAR SKELETON**

(71) Applicant: Act24Earth B.V., 2565 AG 's-Gravenhage (NL)
(72) Inventor: VAN HALEN, Cornelis Jozef Gerardus, 2565 AG 's-Gravenhage (NL)
(74) Representative: Hoyng Rokh Monegier LLP

(57) **Abstract**

The invention relates generally to a modular skeleton structure (1), a kit of parts for building a modular skeleton structure (1), to a method for erecting the modular skeleton structure (1), to a connection unit (3) for connecting elongate members (2) in a plane to build the modular skeleton structure (1) and to the use of the modular skeleton structure (1) as support structure in a greenhouse, tent, encapsulation, shielding container or shelter. The modular skeleton structure (1) comprises a number of elongate members (2), a number of connection units (3) comprising three entrances (31) for connecting three elongate members (2) at mutual angles of 120° in a plane in a relaxed state, wherein the elongate members (2) or the connection units (3) or both are made from a flexible material, wherein the elongate members (2) are connected with the connection units (3) in a hexagonal pattern (100) to a rectangular plane comprising two opposing long sides (11,12) and two other opposing sides (13,14), which rectangular plane (10) is bent into in a semi-cylindrical shaped skeleton structure (1) comprising the two long sides (11,12) in a bottom plane and two bent sides (13,14).

## Description

### BACKGROUND OF THE INVENTION

The invention relates generally to a modular skeleton structure and more particularly to a kit of parts for building a modular structure, to a method for erecting the modular skeleton structure and to a connection unit for connecting elongate members in a plane of the modular skeleton structure and to the use of the modular skeleton structure as support structure in a greenhouse, tent, encapsulation, shielding container or shelter.

Document FR2324222 discloses a tunnel-shaped greenhouse with a modular hexagonal skeleton structure. The greenhouse is constructed from a lightweight tubular frame covered with transparent plastic sheet. The frame is built from hexagonal modules made from separate elements comprising connection means and elongate members. The connection means in FR2324222 are shaped to hold the face of the hexagonal modules at the required angles in the tunnel shaped shelter and the segments in between the connection means of the hexagonal structure are straight. One particular disadvantage of this tunnel shaped greenhouse is that it is very difficult to erect in an efficient manner. Building the structure may require specialized and/or multiple people or at least a supporting structure underneath the greenhouse. Furthermore, there is no flexibility of choice of the size and shape of the tunnel shaped greenhouse as the shape herein is entirely determined by the angles in the connection means.

Document ES1017970 discloses a greenhouse comprising plastic materials that allow the passage of light and defined closed spaces of multiple structural conformation, characterized in that the outside of the greenhouse is provided with modular panels of transparent rigid plastic material and the inside comprises a set of hexagonal cells. The greenhouse from ES 1017970 is also difficult to erect as the structure is not designed to have modular features. Assembling the greenhouse will require an industrial production process.

Thus, there is a particular need for a modular skeleton structure that solves at least one of the abovementioned disadvantages of the prior art.

### BRIEF SUMMARY OF THE INVENTION

The present invention addresses these problems by providing a modular skeleton structure, comprising: a number of elongate members; a number of connection units comprising three entrances for connecting three elongate members at mutual angles of 120° in a plane, in a relaxed state, wherein the elongate members or the connection units or both are made from a flexible material, wherein the elongate members are connected with the connection units in a hexagonal pattern to a rectangular plane comprising two sides and two bendable sides, which rectangular plane is bent into in a semi-cylindrical shaped skeleton structure comprising two long sides in a bottom plane and two bent sides.

Having a modular skeleton structure of the present disclosure allows for fast construction of the modular skeleton. The hexagonal pattern can be made by connecting the elongate members with the connection units to form a substantially rectangular plane. The hexagonal patterned structure can be constructed while the structure is supported by the ground. The structure may be assembled in a substantially flat plane on the ground, before it is brought into the final shape. Thus, there is no complexity in assembling connection means and elongate members, no need of a supporting structure to build the erect structure and no need for multiple and/or specialized people to help erect the structure during building. Having connection units with three entrances for connecting the elongate members in a plane, in a relaxed state, allows the formation of the hexagonal pattern in a substantially flat plane. Once the entire hexagonal structure is formed, two sides of the plane can be brought closer together, thereby forcing the other two sides of the plane to bend. By bending the two bendable sides of the hexagonal plane, the modular skeleton structure can be erected, thereby forming a semi-cylindrical shape. This strongly reduces the complexities associated with producing a modular skeleton structure in accordance with the previously known structures. Apart from that, the advantage is that the size and shape of the structure can be chosen more flexible, as it is not determined by a pre-defined angle in the connection means. Another advantage is that the structure is more resilient in storm conditions because deformation stresses are more evenly distributed over the connection elements in the structure. The connection units may bend but not break.

The angles between the entrances in the connection units, as seen when projected on a flat plane are 120° and add to 360°. The angles between the entrances in the connection units may vary slightly, as is to be expected from any production process that has a limited accuracy. The entrances of the connection units lie in a plane in a relaxed un-tensioned state. Small deviations from perfectly flat are acceptable and fall within the scope of the present disclosure.

The term rectangular plane is to be understood to also cover a bent rectangular plane. While the hexagonal pattern defines a rectangular plane, this rectangular plane may be bent to form a semi-cylindrical shape. The semi-cylindrical shape may be perfectly semi-cylindrical but may also be ellipsoidal, skewed or substantially straight in some areas, if so desired.

Another aspect of the invention relates to a kit of parts for building the modular structure as described above, comprising: a number of elongate members; a number of connection units for connecting the elongate members; optionally one or more support beams, preferably comprising support beam elements and support beam connectors, optionally one or more tensioning devices for applying tension to erect a hexagonal assembly of elongate members and connection units, wherein preferably none of the components of the modular structure kit exceed a length of 500 cm, preferably 125 cm, more preferably 50 cm. Tensioning devices optionally included in the kit of parts may be ropes, chains, tensioning bands, pulleys, spanner wrenches, a tension strap with a ratchet, a rattle strap or any other appropriate tensioning device.

Providing a kit of parts in accordance with the present disclosure aids in the advantage of increased simplicity and reduced costs of erecting a modular skeleton structure. Preferably, the kit of parts of building the modular skeleton structure is sent to the destination where the structure will be erected in a simple and cheap fashion. Since the skeleton structure is modular, the components forming the modular skeleton structure can be packaged easily. In particular, providing a kit of parts with a maximum weight and a maximum volume aids in the process of creating the modular skeleton structure in an easy and accessible manner.

Another aspect of the invention comprises a method for erecting the modular skeleton structure comprising; providing a kit of parts for building the modular skeleton structure; coupling a plurality of the elongate members with a plurality of the connection units in a hexagonal pattern to form a rectangular plane having two sides and two bendable sides; and moving the two sides of the plane towards each other and bending and raising the plane to form a semi-cylindrical shaped skeleton structure.

This addresses the abovementioned problems of complexity in building a modular skeleton structure. By first coupling the elongate members with the connection units, the substantially rectangular plane is created. By moving two sides towards each other in the ground plan, the other sides are bent to a semi-circular shape along with the entire rectangular plane. The plane then defines a semi-cylindrical skeleton structure. This method allows the easy formation of the modular skeleton structure, thereby allowing for a structure to be erected by a few people. Further, this simple method of erecting a structure does not require technical knowledge.

Another aspect of the invention relates to a connection unit for connecting elongate members in a plane of a modular structure, the connection unit comprising: a substantially flat surface; three entrances adapted to receive elongate members therein; and one or more attachment units, wherein the entrances are provided in the substantially flat surface in a relaxed un-tensioned state, having angles of about 120° between them to engage elongate members in a substantially flat plane. One or more additional entrances at about 60° of these main entrances may be provided in the connection units to create additional possibilities for support. Optional extra entrances may also allow two entrances to be parallel to one another, thereby providing the possibility of creating a straight connection on the side of the hexagonal pattern.

Providing a connection unit according to the present disclosure allows for the hexagonal structure to be manufactured in a flat plane, before bringing the sides together to erect the structure. Having one or more attachment units allows other appliances to be connected to the modular skeleton structure. An internal tensional structure may for instance be provided, thereby increasing the structural integrity of the modular skeleton structure. Other appliances may be dew chords, shadow cloths or any other appliance.

### BRIEF DESCRIPTION OF THE DRAWINGS

The features and advantages of the invention will be appreciated upon reference to the following drawings, in which:
FIG. 1 is a plan view of one embodiment of the invention showing the modular skeleton structure in an erect state;
FIG. 2 is a plan view of one embodiment of the invention showing the connection unit;
FIG. 3 is a sectional view of one embodiment of the invention showing the modular skeleton structure showing three phases during its erection;
FIG. 4 is a side view of one embodiment of the invention showing a horizontal support beam;
FIG. 5 is a cross-sectional view of one embodiment of the invention showing a clamping mechanism;
FIG. 6 shows a plan view of one embodiment of the invention showing the modular skeleton having a side that is closed off by a closing means;
FIG. 7 shows a side view of one embodiment of the invention showing the modular skeleton having a straight side by use of non-symmetrical connection units; and
FIG. 8 shows different semi-cylindrical shapes of the cross-section of the modular skeleton structure.

### DESCRIPTION OF ILLUSTRATIVE EMBODIMENTS

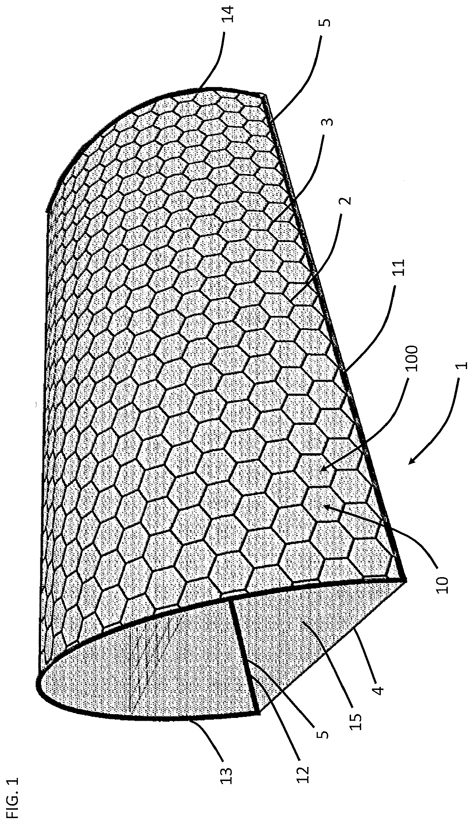

A first embodiment in accordance with the invention is shown in Figure 1. A modular skeleton structure having a hexagonal pattern is shown in an erected state. The modular skeleton structure 1 comprises a number of elongate members 2; a number of connection units 3 comprising three entrances 31 for connecting three elongate members at mutual angles of 120° in a plane, in a relaxed un-tensioned state, wherein the elongate members 2 or the connection units 3 or both are made from a flexible material wherein the elongate members 2 are connected with the connection units 3 in a hexagonal pattern 100 to a rectangular plane 10 comprising two sides 11, 12 and two bendable sides 13, 14, which rectangular plane is bent into in a semi-cylindrical shaped skeleton structure 1 comprising two long sides 11, 12 in a bottom plane 15 and two bended sides 13, 14.

The term semi-cylindrical shaped implies that the plane 10 is bend to a semi-elliptical or approximately half circular shape. An elliptical or circular shape is preferred because the bending stress is more equally spread over the connection units 3 and elongate members 2 and the height of the structure 1 and area of the enclosed bottom plane can both be optimised, but the shape does not necessarily have to be circular or elliptical. Other curved shapes are also possible like elliptical or parabolical of a slightly flattened circular shape, for example the part of plane 10 adjacent to the bottom plane may be kept more vertical and then bend inward more sharply. The hexagonal patterned rectangular planar skeleton structure is thus bent to enclose a space with a substantially semi-cylindrically curved plane, a bottom plane and side planes. The space can define areas for growing plants, sheltering, supporting growing plants, camouflage, protecting coral or any other use.

In a preferred embodiment of the modular structure 1 according to the invention, the elongate members 2 are made from composite material, metal, wood, bamboo or alternative organic stems or any combination thereof. This allows the material to be sourced in an easy manner, while still providing enough structural strength, especially when considering the density of the used material and the volume the material may have as a result of the required strength. The choice of material typically is a compromise in strength, durability and low costs. Combinations comprise intra- and inter-member combinations. So, one member can be combination of materials, but the number of members may also comprise a set of members of one material and one or sets of members made of a different material. Having a combination of materials provides the possibility to introduce different flexibility and strengths on different parts of the modular skeleton structure. So, in an alternative embodiment the rectangular plane 10 in the skeleton structure comprises two or more areal parts with different elongate members. For example, the elongate members near edges 11 and/or 12 may be stiffer or less stiff than in the middle, such that the roof structure is flattened and/or the skeleton structure near the edge are more perpendicular than in a cylindrical shape.

The length of elongate members 2 depends on one hand mainly on the ease of use in building the modular structure and in ease of handling of the kit of parts on the other hand the requirements of the skeleton structure in terms of size, volume, weight and strength. For larger skeleton structures, a higher length of the elongate members 2 may be chosen, but in view of the required stiffness then also the diameter or wall thickness of the elongated members must be increased.

The elongate members 2 may have any cross-sectional shape. The cross-section, perpendicular to the length axis of the elongate member 2, may be circular, square, rectangular, or ellipsoidal shaped. Preferably, the cross-section, perpendicular to the length-axis of the elongate member 2, is circular, more preferably hollow cylindrical. Preferably, the elongate members 2 have a cross-sectional surface area of less than about 2000 mm², preferably less than about 500 mm², more preferably less than about 200 mm², even more preferably less than about 100 mm² and wherein the length of the elongate member 2 preferably is between 5 cm and 500 cm, more preferably between 30 cm and 300 cm. Preferably the length of the elongated member is between 2 and 1000, more preferably between 5 and 100, even more preferably between 10 and 100 times shorter than the length of the two bendable sides 13, 14.

The elongate members 2 are preferably straight and preferably cylindrical but may also be formed in any other appropriate shape. The elongate members 2 may for example also have a sinusoidal shape disposed therein.

The skeleton structure 1 can be erected by tensioning the hexagonally patterned rectangular plane 10. Therefore, at least some of the components of the hexagonally patterned rectangular plane 10 must be adapted to deform under applied tension. Preferably this deformation is elastic. This can be achieved by allowing the elongate members 2 to deform under tension and/or the connection units 3 to deform under tension.

It is preferred that the elongate members 2 are made from a flexible material, preferably having an Elasticity modulus of between about 0.01 and 200 GPa as defined and determined in ASTM E111, preferably of between about 0.1 and 100 GPa, more preferably of between about 0.5 and 50 GPa, even more preferably of between 1 and 30 GPa and bend under the torque applied when erecting the rectangular plane by bringing the bendable sides 13, 14 closer together. Herein the Elasticity modulus of the elongate members 2 at least partly determines the resistance for bringing the bendable sides 13, 14 together.

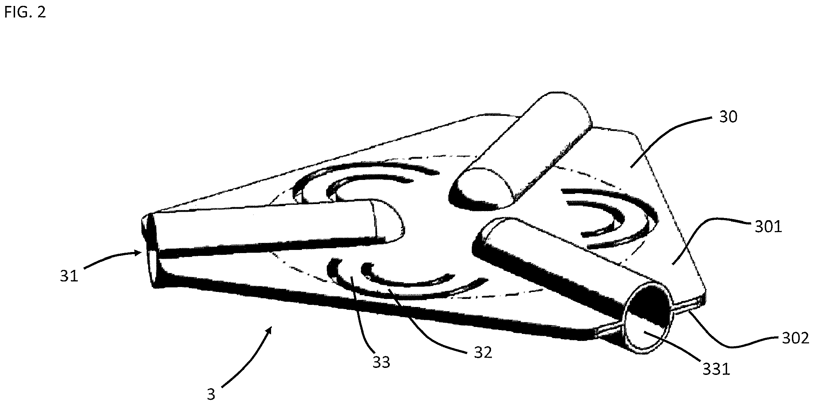

Figure 2 shows an embodiment of the connection unit 3 in accordance with the invention. In an embodiment according to the invention, the connection unit 3 is made from a strong and durable material which holds the elongate members 2 disposed in the entrances 31. It is preferably made of a stiff material that does not substantially deform under a tensioning moment from the elongate members when bending the hexagonal patterned rectangular plane 10. In this embodiment, the elongate members 2 deform elastically when the plane 10 is erected and adopts a substantially semi-cylindrical shape. Strong and durable in this embodiment entails that there is no need for the connection unit 3 to deform under tension. The result is that the connection unit can be made from strong material such as e.g. aluminium, steel, composite, polymer, etc. Deformation in this context entails elastic deformation. While plastic deformation may occur in certain instances, the deformation should generally be reversible when the tension is removed from the components of the structure 1.

If the connection unit 3 is formed from a strong and durable material, the curved shape of the plane is then predominantly the result of the flexion in the elongate members 2. In this embodiment, flexion of the connection unit 3 is minimised with respect to the elongate members 2. Having a connection unit 3 that does not allow for substantive deformation aids in the simplicity and durability of the connection unit. Since the connection unit 3 is substantially flat, the hexagonal structure 10 can be created while resting on the ground. Once the sides 11 and 12 are brought closer together, the elongate members 2 may deform, but the connection unit 3 has no substantial deformation with respect to the elongate members 2. As a result, the connection units 3 can be made from a strong and durable material, thereby minimizing wear and increasing life span.

In an embodiment, the connection unit 3 is made from metal, wood or an elastic material such as a polymer and/or comprising shape features designed to enable the connection unit to accommodate torque for deformation on bending. In view of the structural integrity and stiffness of the skeleton structure, it is preferred that the openings are tight fit to the members so as to not allow any dispositioning on bending and the material of the connection units is preferably substantially stiff and strong in combination with elongate members that are bendable.

In an alternative embodiment, the connection unit 3 is made from a flexible material which bends when elongate members 2 disposed in the entrances 31 create a tensioning moment on the connection unit 3. The connection unit 3 may then deform under a load applied to the connection unit 3 by the elongate members 2 as a result of the formation of the shape of the modular skeleton structure 1. In this embodiment the elongate members 2 may be substantially rigid or flexible. In this embodiment, the connection unit 3 can be made from elastomers, rubber or elastic material and/or comprising shape features designed to enable the connector itself to accommodate deformation on bending.

One or more of the connection units 3 may comprise one or more, preferably three, attachment units 32. These attachment units can be used to connect certain appliances to the modular skeleton structure 1. For example, shadow cloth, dew chords or strengthening wires may be attached to the attachment units 32.

The attachment units 32 may be tabs 33 formed in the surface 30 of the connection unit 3. Having tabs 33 that are formed in the surface 30 of the connection unit 3 aids in an increased simplicity in the production process of the connection units 3. The connection units 3 may be created from metal parts or injection moulded or press moulded parts. The tabs 33 may be integrally formed in production or formed by combining two sides. Alternatively, holes are drilled as post-treatment in the surface 30. In another embodiment, tabs 33 can be hooks on a surface 30 of the connection unit 3.

The one or more attachment units 32 may be flexible tabs 33, adapted to bend in an outwardly direction relative to the substantially flat surface 30. Having flexible tabs 33 minimizes the complexity of the production process and more particularly aids in efficient packaging of the parts of the modular skeleton structure 1 when packaged for shipping. Especially not having multiple protruding elements from the connection unit 3 is advantageous for packaging.

The connection unit 3 may be formed from two sides 301, 302, each having three indentations 331 to form the entrances 31 when coupled. In this embodiment, the production process of the connection unit 3 is simplified resulting in lower production times and costs when compared to forming the connection unit 3 from an integral block of material or by forming the connection unit 3 from separate components. By forming the connection unit 3 of two sides 301, 302, imperfections (e.g., welding seams, bolts, rivets) resulting from the manufacture of the connection unit 3 are provided on the sides of the connection unit 3. The resulting connection unit 3 thus provides less wear on any foils or covers applied thereover.

In a simplified alternative embodiment, the connection unit 3 may be formed from three short pipes that are clamped, glued or moulded together. The pipes may be held by a central clamp on the intersection of the pipes to add strength to the connection unit 3. The central clamp may be rigid and preferably the central clamp is strengthened and contains a metal or plastic hook as an attachment unit 32. The hook may be screwed in during the construction or it may be formed as an integrated part of the plastic construction by injection mounding technique.

The two sides 301, 302 may be identical to reduce production cost. The sides 301, 302 can be attached by any attachment means, preferably by welding, gluing or soldering.

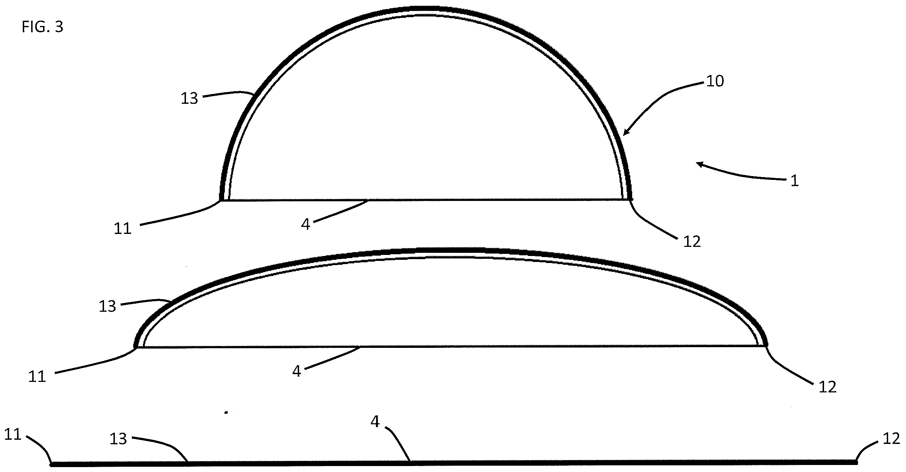

Figure 3 shows a sectional view of one embodiment of the invention showing the modular skeleton structure showing three phases during its erection. In an embodiment according to the invention, the modular structure 1 further comprises a tensioning device 4 for applying tension to at least one of the sides 11, 12 of the plane 10, for erecting the structure 1 and/or for keeping the structure erect. To erect the structure, a tensioning device 4 may be attached to at least one of the sides 11, 12 for applying a tension that is equal to the resulting outward force due to the torque applied to the elongate members 2 and/or the connection units 3. As a result, the tensioning device 4 can keep the structure 1 upright (e.g. in a state of static equilibrium) or allow the structure 1 to be erected or be dismantled in an easy fashion. The tensioning device is preferably selected from the group of ropes, chains, tensioning bands, pulleys, spanner wrenches, a tension strap with a ratchet, a rattle strap or any other appropriate tensioning device.

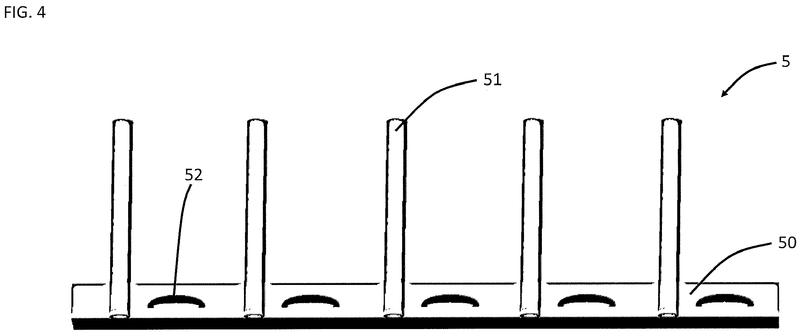

Figure 4 shows a side view of one embodiment of the invention showing a horizontal support beam 5. In an embodiment, the modular structure 1 further comprises a support beam 5 along at least part of side 11 or side 12 or both sides 11 and 12 of the surface 10 which supporting beam has connection means 51 connecting to the connection units 3 or to the elongate members 2 of the semi-cylindrical skeleton structure. In this embodiment, the support beam 5 allows for connection the sides 11 and/or 12, thereby providing for a uniform distribution of the forces applied by the plane 10 to the surface onto which the structure 1 is placed.

Preferably, the support beam 5 is modular, comprising connectable support beam elements. The connectable support beam elements are provided with connection means or are connectable with separate support beam element connectors. Having a modular support beam allows for the application of a support beam over an increased length of at least one of the sides 11, 12, while still allowing the parts of the structure 1 to remain within a maximum dimension to fit in a kit of parts. The support beam elements are connected by the support beam element connectors. The support beam element connectors may be clips, tube connectors, straps, bolts, rivets, or any other appropriate connection means. Preferably, the support beam element connectors are able to connect the support beam elements without substantial intermittent change of the support beam properties.

The connection means 51 in the support beam 5 may be a series of receiving openings, preferably cavities, for receiving an elongate member 2 therein, preferably a cavity with a length axis perpendicular to the long beam axis in case the hexagons in the surface are oriented with elongate members perpendicular on side 11 and/or 12 of the surface area. This substantially perpendicular connection may be advantageous as it maximizes the tensional torque around the centre-line of the plane between sides 11 and 12, thereby increasing the efficiency of the applied force to the sides 11 and 12 when erecting the structure 1.

Alternatively, the connection means 51 in the support beam 5 may be a series of pins for engaging with a hollow member. The hollow member may be an elongate member 2 or a connection unit 3, that engages with the connection means 51 to secure a side 11, 12 of the plane 10 to the support beam 5. Alternatively, the connection means 51 secure a side 11, 12 of the plane 10 to the support beam 5 in another fashion, such as bolting a connection unit 3 to the support beam 5.

In an embodiment, to connect an elongated member or connection unit 3 to the support beam 5, it may be desirable to provide a series of connection units 3 for use at the side of the rectangular plane 10 that have two entrances that are parallel in opposite directions, thereby providing a straight line at the edge of the plane 10 when the elongate members 2 are engaged with the connection units 3. In this embodiment, the connection means 51 may be a set of hooks or rounded grips that engage with the straight series of elongate members 2. The connection units 3 may also be connected to the support beam 5 by the connection means 51 in this embodiment.

The support beam 5 may comprise a tension attachment element 52 adapted to be coupled to the tensioning device 4. The tension attachment element 52 may for instance be a hook-like element disposed on the side of the body 50 of the support beam 5 that may connect to a tensioning device 4 such as ropes, chains, tensioning bands, pulleys, spanner wrenches, a tension strap with a ratchet, a rattle strap or any other appropriate tensioning device.

The support beam 5 may comprises means to contain and dispatch a sheet 6, preferably a foil, net or shadow cloth for covering the plane 10 of the semi-cylindrical structure 1. Applying a foil or a shadow cloth to cover the plane 10 can allow to control the climate in the structure 1. Applying a net to cover the plane 10 may allow to create a protected area in the structure 1.

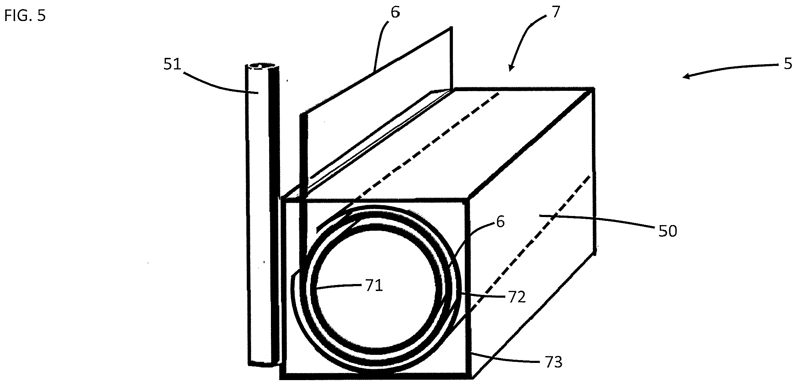

Figure 5 shows a cross-sectional view of one embodiment of the invention showing a clamping mechanism. In an embodiment according to the invention, the support beam 5 comprises a body 50 and a clamping mechanism 7 attached thereto, wherein a sheet 6, preferably a foil or shadow cloth is coupled with the clamping mechanism 7 of the one or more horizontal support beams 5. Having a clamping mechanism 7 attached to the one or more horizontal support beams 5 allows for an increased simplicity and a reduction in parts and volume of parts, thereby achieving advantageous results for the packaging and transportation of the product.

The clamping mechanism 7 may comprise a first cylindrical element 71 around which the sheet 6, preferably a foil, net or shadow cloth is wrapped, and a second cylindrical element 72 disposed around the first cylindrical element 71 and the sheet 6, wherein the first cylindrical element 71 is rotationally movable with respect to the body 50 of the horizontal support beam 5, wherein the second cylindrical element 72 comprises an opening through which the sheet 6 traverses. The sheet rolls around the first cylindrical element 71 thereby being frictionally bound to the outer surface of the first cylindrical element 71. By applying pressure on the second cylindrical element 72, the free rotation of the first cylindrical element 71 can be limited, thereby clamping the sheet between the inner surface of the second cylindrical element 72 and the outer surface of the first cylindrical element 71. In alternative embodiments, the connection of the sheet to the horizontal support beam 5 may be achieved by connecting the sheet directly to the body 50 of the support beam 5. In yet another alternative embodiment, the sheet is not connected to the support beam 5 but rather is attached to the soil onto which the structure 1 is placed by, for example, pins that are driven into the ground, through the sheet.

The first cylindrical element 71 of the clamping mechanism 7 of a first horizontal support beam 5 may be coupled to the first cylindrical element 71 of the clamping mechanism 7 of a second horizontal support beam 5 with a pipe-connector. This allows for the erection of a long structure without the need for an uninterrupted cylindrical element along the entire length of the structure to be erected.

The clamping mechanism 7 may further comprise a housing 73, wherein the first and second cylindrical elements 71, 72 are disposed in the housing 73, wherein the housing 73 comprises a slit opening through which the foil 6 traverses. Closing the housing 73 may block the rotation of the first and/or second cylindrical elements 71, 72, thereby clamping the foil. In an embodiment, the housing 73 may be an integral part of the body 50 of the support beam 5. Multiple housing elements 73 may be provided in the kit of parts to allow for the formation of a longitudinally formed housing 73 that is longer than the maximum dimension of the kit of parts.

In a special embodiment, the erected semi-cylindrical skeleton structure is provided with an internal secondary skeleton attached to the attachment units 32 of the connection units 3, wherein the internal secondary skeleton comprises tensioning members attached between at least two of the attachment units 32, preferably attached between at least two, more preferably at least 3, of the attachment units 32 in hexagons in at least part of the surface of the hexagonal patterned skeleton 10, wherein the tensioning members are preferably selected from the group of ropes, strings, elastic bands, tie raps, metal screw tensioning members or combinations thereof. Applying an internal secondary skeleton to the inside of the structure 1 may lead to a higher structural integrity of the total structure 1. The internal secondary skeleton can also be used to influence the shape.

The modular structure 1 may further comprise additional components attached to the at least one attachment units 32, such as shade cloth or dripping rope.

The modular structure 1 may further comprise a sheet 6, preferably a foil, a net or a shadow cloth, applied over the outer plane of the modular structure 1.

The modular structure 1 may further comprise ground fixation pins attached thereto, preferably attached to the support beams 5.

In an embodiment, the modular structure 1 is a greenhouse, a shelter, a house, encapsulation, shielding container, a camouflage device, but preferably a greenhouse, shadow house or coral encapsulation. In an embodiment, preferably as a greenhouse, the sheet 6 is a UV greenhouse film. In a shadow house, the sheet may be a shadow cloth. In a coral protection encapsulation, the sheet is a protection net allowing fish to pass.

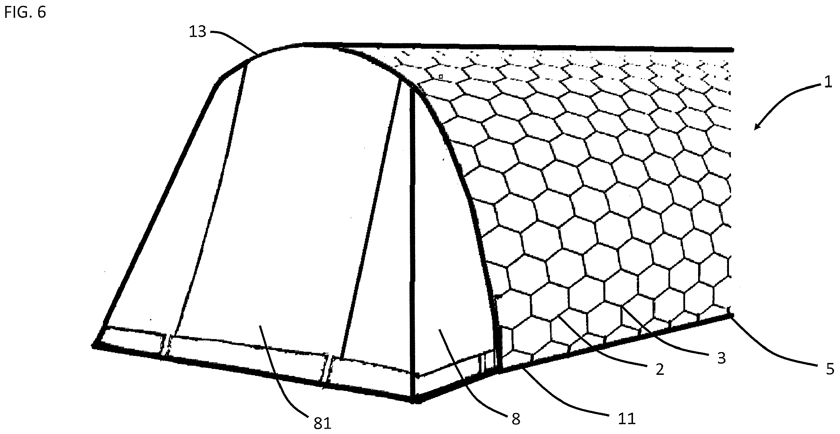

Figure 6 shows a plan view of one embodiment of the invention showing the modular skeleton having a side that is closed off by closing means 8. In an embodiment according to the invention, the sides of the semi-cylindrical skeleton structure, defined by the bendable sides 13 or 14 and the bottom plane 15 of the semi-cylindrical shape are also provided with closing means 8, preferably by panel or cloth or sheet. By closing the sides of the semi-cylindrical shape, the encapsulation of the inside area may be completed and/or the climate in the structure 1 can be controlled.

The closing means 8 may comprise textile, net and/or foil material. In a preferred embodiment, the closing means 8 further comprises a door-opening 81, wherein the door-opening 81 can preferably be closed in a substantially airtight fashion. Having a door-opening that can be opened and closed allows for the user to influence the inside climate in an advantageous manner. For example, in a desert environment, opening the door-opening 81 during the night can allow moisture to be captured inside the structure 1. Closing the door-opening 81 during the day can then trap the moisture inside the structure 1, thereby increasing the moisture delivered to the plants in the structure 1.

Another aspect of the invention relates to a kit of parts for building the modular structure 1 according the above explanation, comprising: a number of elongate members 2; a number of connection units 3 for connecting the elongate members 2; optionally one or more support beams 5, preferably comprising support beam elements and support beam connectors, optionally one or more tensioning devices 4 for applying tension to erect a hexagonal assembly of elongate members 2 and connection units 3, wherein preferably none of the components of the modular structure kit exceed a length of 500 cm, preferably 125 cm, more preferably 50 cm.

Another aspect of the invention comprises a method for erecting the modular skeleton structure 1 comprising; providing a kit of parts for building the modular skeleton structure 1; coupling a plurality of the elongate members 2 with a plurality of the connection units 3 in a hexagonal pattern to form a rectangular plane 10 having two sides 11, 12 and two bendable sides 13, 14; and moving the two sides 11, 12 of the plane 10 towards each other and bending and raising the plane 10 to form a semi-cylindrical shaped skeleton structure 1.

The method for erecting the modular skeleton structure 1 may further comprise using a tensioning device 4 for moving the two sides 11, 12 of the plane 10 towards each other by coupling the tensioning device 4 with at least one of the two sides 11, 12 of the plane 10; and engaging the tensioning device 4 to apply tension to at least one of the two sides 11, 12 of the plane 10 to raise the plane 10 to form a substantially semi-cylindrical shape.

The method for erecting the modular skeleton structure 1 may further comprise the step of applying a sheet 6, preferably a foil, net or shadow cloth over the erect modular structure 1 and optionally also a step of providing closing means 8 to close the side planes of the semi-cylindrical skeleton structure.

The method for erecting the modular skeleton structure 1 may further comprise the step of increasing the mass of the support beams or of clamping mechanism 7 by filling the first cylindrical element 71 with a material having a density of at least 100 kg/m³. Increasing the weight of the support beam 5, preferably the clamping mechanism 7 by applying a material having a relatively high density to it, such as rocks or sand, can increase the stability of the structure in harsh conditions, while limiting the need to increase the weight of the components of the structure 1.

Another aspect of the invention relates to a connection unit 3 for connecting elongate members 2 in a plane of a modular structure 1, the connection unit 3 comprising: a substantially flat surface 30; three entrances 31 adapted to receive elongate members 2 therein; and one or more attachment units 32, wherein the entrances 31 are provided in the substantially flat surface 30, in a relaxed un-tensioned state, having angles of about 120° between them to engage elongate members 2 in a substantially flat plane. An embodiment of this aspect of the invention can be seen in Figure 2 of the drawings.

The connection unit 3 may be adapted to flex when elongate members 2 disposed in the entrances 31 create a tensioning moment on the surface 30 of the connection unit 3.

The one or more attachment units 32 may be tabs 33 formed in the substantially flat surface 30.

The one or more attachment units 32 may be flexible tabs 33, adapted to bend outwardly, relative to the substantially flat surface 30.

The connection unit 3 may be formed from two sides 301, 302, each having three indentations 331 to form the entrances 31 when coupled.

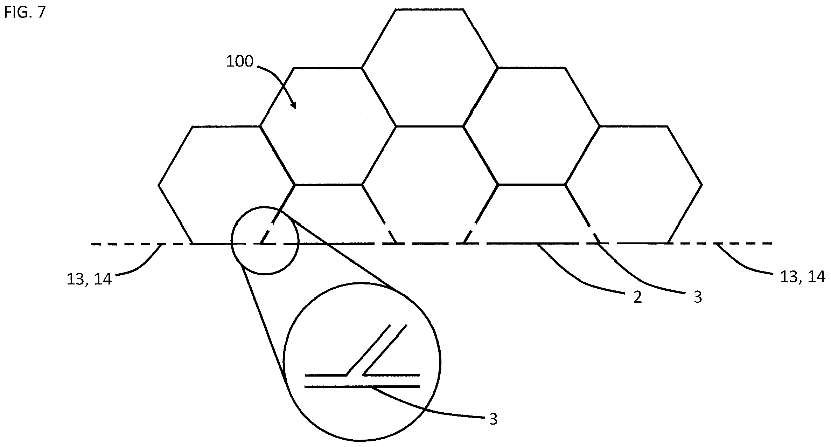

Figure 7 shows another aspect of the invention relating to an edge connection unit for connecting elongate members at the edges 13 and/or 14, which edge connection unit comprise three entrances adapted to receive elongate members wherein the entrances are provided in a substantially flat surface in a relaxed un-tensioned state, wherein 2 entrances are at an angles of about 180° and the third entrance is at 60° and 120° of the first and second entrance. These connection units can be used in combination with (coupled) edge elongate members having twice the length of the elongate members in the hexagons to form a straight edge 13 and 14, which contributes to the strength of the skeleton structure and makes it easier to connect closing means 8 at the side planes. Preferably, the kit of parts further comprises such edge connection members and edge elongate members.

Another aspect of the invention is the use of the modular skeleton structure 1 as a support structure in a greenhouse, tent, encapsulation, shielding container or shelter. The modular skeleton structure 1 has many uses, it may for example serve as a solution for areas where shelter is needed quickly (e.g. military applications). The modular skeleton structure 1 may also serve as a greenhouse, which can easily be erected. The invention also relates to a greenhouse, tent, encapsulation, shielding container or shelter comprising the modular skeleton structure of the invention as a support structure.

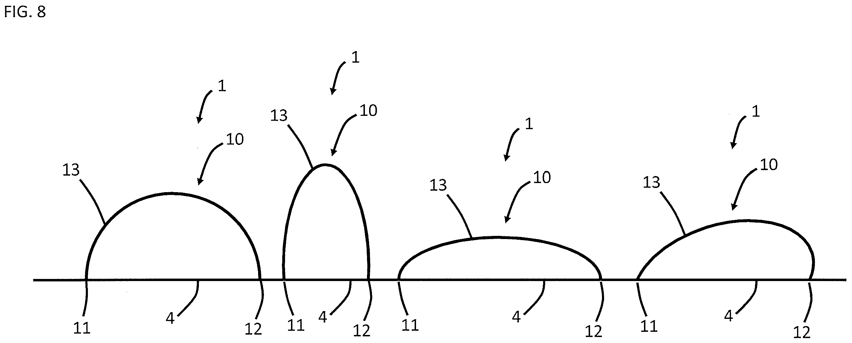

Figure 8 shows different semi-cylindrical shapes of the cross-section of the modular skeleton structure. The semi-cylindrical shape may be perfectly semi-cylindrical but may also be ellipsoidal, skewed or substantially straight in some areas, if so desired. The cross-sectional shape and the size of the modular skeleton structure 1 may be varied as desired by the user. Because of the modular characteristics and the possibility of components of the structure to deform under tension, the modular skeleton structure 1 of the present disclosure is highly versatile.

## Claims

1. A modular skeleton structure (1), comprising:
a number of elongate members (2);
a number of connection units (3) comprising three entrances (31) for connecting three elongate members at mutual angles of 120° in a plane in a relaxed un-tensioned state, wherein the elongate members (2) or the connection units (3) or both are made from a flexible material,
wherein the elongate members (2) are connected with the connection units (3) in a hexagonal pattern (100) to a rectangular plane (10) comprising two sides (11, 12) and two sides (13, 14),
which rectangular plane is bent into in a semi-cylindrical shaped skeleton structure (1) comprising two long sides (11, 12) in a bottom plane (15) and two bent sides (13, 14).

2. The modular structure (1) according to claim 1, wherein the elongate members (2) are made from composite material, metal, wood, bamboo or alternative organic stems or any combination thereof, wherein preferably the elongate members (2) have a cross-section perpendicular to its length axis that is circular, square, rectangular, or ellipsoidal shaped and wherein more preferably the elongate members (2) have a cross-sectional surface area of less than about 2000 mm², preferably less than about 500 mm², more preferably less than about 200 mm², even more preferably less than about 100 mm² and wherein the length of the elongate member (2) preferably is between 5 cm and 500 cm, more preferably between 30 cm and 300 cm and preferably is between 2 and 1000, more preferably between 5 and 100, even more preferably between 10 and 100 times shorter than the length of the two bendable sides (13, 14).

3. The modular structure (1) according to any of the preceding claims, wherein the connection unit (3) is made from a strong and durable material which holds the elongate members (2) disposed in the entrances (31) and does not deform under a tensioning moment from the elongate members on the surface (30) of the connection unit, wherein preferably the connection units (3) further comprise one or more, preferably three, attachment units (32), wherein the attachment units (32) preferably are tabs (33) formed in the surface (30) of the connection unit (3) and wherein more preferably the one or more attachment units (32) are flexible tabs (33), adapted to bend outwardly, relative to the substantially flat surface (30).

4. The modular structure (1) according to any of the preceding claims, wherein the connection unit (3) is formed from two sides (301, 302), each having three indentations (331) to form the entrances (31) when coupled.

5. The modular structure (1) according to any of the preceding claims, further comprising a tensioning device (4) for applying tension to at least one of the sides (11, 12) of the plane (10), for erecting the structure (1) and/or for keeping the structure erect.

6. The modular structure (1) according to any of the preceding claims, further comprising a support beam (5) along at least part of side (11) or side (12) or both sides (11) and (12) of the surface (10) which supporting beam has connection means (51) connecting to the connection units (3) or to the elongate members (2) of the semi-cylindrical skeleton wherein preferably the support beam (5) is modular, comprising connectable support beam elements and wherein preferably the connection means (51) in the support beam (5) are a series of receiving openings, preferably cavities, for receiving an elongate member (2) therein, preferably a cavity with a length axis perpendicular to the long beam axis in case the hexagons in the surface are oriented with elongate members perpendicular on side (11) and (12) of the surface area and wherein preferably the support beam (5) comprises a tension attachment element (52) adapted to be coupled to the tensioning device (4).

7. The modular structure (1) according to claim 6, wherein the support beam (5) comprises means to contain and dispatch a sheet (6), preferably a foil, net or shadow cloth, for covering the plane (10) of the semi-cylindrical skeleton and/or wherein the support beam (5) comprises a body (50) and a clamping mechanism (7) attached thereto, wherein a sheet (6) is coupled with the clamping mechanism (7) of the one or more horizontal support beams (5)wherein preferably the clamping mechanism (7) comprises a first cylindrical element (71) around which the sheet (6) is wrapped, and a second cylindrical element (72) disposed around the first cylindrical element (71) and the sheet (6), wherein the first cylindrical element (71) is rotationally movable with respect to the body (50) of the horizontal support beam (5), wherein the second cylindrical element (72) comprises an opening through which the foil (6) traverses wherein more preferably the first cylindrical element (71) of the clamping mechanism (7) of a first horizontal support beam (5) is coupled to the first cylindrical element (71) of the clamping mechanism (7) of a second horizontal support beam (5) with a pipe-connector and wherein even more preferably the clamping mechanism (7) further comprises a housing (73), wherein the first and second cylindrical elements (71, 72) are disposed in the housing (73), wherein the housing (73) comprises a slit opening through which the foil (6) traverses.

8. The modular structure (1) according to any of the preceding claims, wherein the connection units (3) further comprise one or more attachment units (32) and the modular structure comprises an internal secondary skeleton attached to the attachment units (32), wherein the internal secondary skeleton comprises tensioning members attached between at least two of the attachment units (32), preferably attached between at least two, more preferably at least three, of the attachment units (32) in hexagons in at least part of the surface of the hexagonal patterned skeleton (10), wherein the tensioning device is preferably selected from the group of ropes, chains, tensioning bands, pulleys, spanner wrenches, a tension strap with a ratchet, a rattle strap or any other appropriate tensioning device.

9. The modular structure (1) according to any of claims 2-8, further comprising additional components attached to the at least one attachment units (32), such as shade cloth or dripping rope, wherein the modular structure preferably further comprises a sheet (6), preferably a foil, a net or a shadow cloth applied over the outer plane of the modular structure (1) and/or wherein the modular structure (1) further comprises ground fixation pins attached thereto, preferably attached to the support beams (5) and wherein more preferably the modular structure (1) is a greenhouse, encapsulation, shielding container a shelter, a house, a camouflage device, but most preferably a greenhouse, shadow house or coral encapsulation.

10. The modular structure (1) according any of the preceding claims, wherein the side planes, defined by the bendable sides (13, 14) and the bottom plane (15) of the semi-cylindrical shape, are provided with closing means (8) wherein preferably the closing means (8) comprises net, textile and/or foil (6) material and wherein more preferably the closing means (8) further comprises a door-opening (81), wherein the door-opening (81) preferably can be closed in a substantially airtight fashion.

11. A kit of parts for building a modular structure according to anyone of claims 1-10, comprising:
a. a number of elongate members (2) as described in anyone of claims 1-10;
b. a number of connection units (3) for connecting the elongate members (2) as described in anyone of claims 1-10;
c. optionally one or more support beams (5) as described in anyone of claims 6-10, preferably comprising support beam elements and support beam connectors,
d. optionally one or more tensioning devices (4) for applying tension to erect a hexagonal assembly of elongate members (2) and connection units (3),
e. wherein preferably none of the components of the modular structure (1) kit exceed a length of 500 cm, preferably 125 cm, more preferably 50 cm.

12. A method for erecting a modular skeleton structure (1) comprising
a. providing a kit of parts of claim 30;
b. coupling a plurality of the elongate members (2) with a plurality of the connection units (3) in a hexagonal pattern to form a rectangular plane (10) having two sides (11, 12) and two bendable sides (13, 14);
c. moving the two sides (11, 12) of the plane (10) towards each other and bending and raising the plane (10) to form a semi-cylindrical shaped skeleton structure wherein preferably the modular skeleton structure (1) comprises a tensioning device (4) and in step c) the two sides (11, 12) of the plane (10) are moved towards each other by
a. coupling the tensioning device (4) with at least one of the two sides (11, 12) of the plane (10);
b. engaging the tensioning device (4) to apply tension to at least one of the two sides (11, 12) of the plane (10) to raise the plane (10) to form a substantially semi-cylindrical shape wherein the method more preferably further comprises the step of applying a sheet (6), preferably a foil, net or shadow cloth over the erect modular structure (1) and wherein the method even more preferably further comprises the step of increasing the mass of the support beams or of clamping mechanism (7) by filling the first cylindrical element (71) with a material having a density of at least 100 kg/m³.

13. A connection unit (3) for connecting elongate members (2) in a plane (10) of a modular structure (1), the connection unit (3) comprising:
a) a substantially flat surface (30);
b) three entrances (31) adapted to receive elongate members (2) therein; and
c) one or more attachment units (32),
d) wherein the entrances (31) are provided in the substantially flat surface (30), in a pre-tensioned state, having angles of about 120° between them to engage elongate members in a substantially flat plane, wherein preferably the connection unit (3) is adapted to elastically deform when elongate members (2) disposed in the entrances (31) create a tensioning moment on the surface (30) of the connection unit or wherein the connection unit (3) is made from a strong and durable material which holds the elongate members (2) disposed in the entrances (31) and does not deform under the tensioning moment from the elongate members on the surface (30) of the connection unit.

14. The connection unit (3) of claim 13, wherein the one or more attachment units (32) are tabs (33) formed in the substantially flat surface (30)and wherein preferably the one or more attachment units (32) are flexible tabs (33), adapted to bend outwardly, relative to the substantially flat surface (30) and wherein more preferably the connection unit (3) is formed from two sides (301, 302), each having three indentations (331) to form the entrances (31) when coupled.

15. Use of the modular structure (1) according to any of claims 1-14 as support structure in a greenhouse, tent, encapsulation, shielding container or shelter.
